Europäisches Patentamt

**European Patent Office**

Office européen des brevets

(19)

(11) Numéro de publication: **0 028 573**
**B1**

(12) # FASCICULE DE BREVET EUROPEEN

(45) Date de publication du fascicule du brevet:
14.08.85

(51) Int. Cl.⁴: **A 01 G 15/00, E 01 H 13/00**

(21) Numéro de dépôt: **80401558.4**

(22) Date de dépôt: **31.10.80**

(54) **Procédé de modification artificielle des précipitations atmosphériques ainsi que compositions à base de diméthylsulfoxyde destinées à mettre en oeuvre ce procédé.**

(30) Priorité: 02.11.79 FR 7927135
20.06.80 FR 8013745

(43) Date de publication de la demande:
13.05.81 Bulletin 81/19

(45) Mention de la délivrance du brevet:
14.08.85 Bulletin 85/33

(84) Etats contractants désignés:
AT BE CH DE FR GB IT LI LU NL SE

(56) Documents cités:
FR - A - 2 148 669
FR - A - 2 164 785

Angewandte Chemie 72 (1960), p. 618-626
Angewandte Chemie 6 (1967), International Edition, p. 318-334

(73) Titulaire: **ANVAR Agence Nationale de Valorisation de la Recherche, 43, rue Caumartin, F-75436 Paris Cédex 09 (FR)**

(72) Inventeur: **Montmory, Robert, 415, Montée de Chartreuse, F-38330 St Ismier (FR)**

(74) Mandataire: **Nony, Michel et al, Cabinet Nony 29, rue Cambacérès, F-75008 Paris (FR)**

### Description

La présente invention a pour objet un procédé de modification artificielle des précipitations atmosphériques, ainsi que des compositions à base de diméthylsulfoxyde destinées à mettre en œuvre ce procédé.

Plus précisément, le procédé de modification des précipitations atmosphériques de la présente demande permet d'obtenir localement la stimulation de la pluie, la dissipation des brouillards, et la prévention de la grêle.

Les techniques préconisées jusqu'à présent pour la modification des précipitations atmosphériques sont fondées essentiellement sur l'ensemencement des nuages à l'aide de particules solides de faible dimension d'agents glaçogènes ou d'agents modificateurs des processus de condensation et de coalescence.

On sait que les nuages se forment par ascension de volumes d'air atmosphérique humide dans des régions plus froides où la pression de la vapeur d'eau devient supérieure à la saturation, de sorte que la condensation se produit sous forme de très petites gouttelettes d'eau. Lorsque le nuage est entraîné sous l'effet des mouvements ascendants à des altitudes où la température est inférieure à 0°C, les gouttelettes restent liquides, à l'état surfondu. La phase solide (glace) n'est susceptible d'apparaître qu'à des températures inférieures à −15°C environ et à la condition que soient présentes certaines particules spécifiques appelées noyaux glaçogènes. Ceux-ci sont peu nombreux, de l'ordre de 1 par litre à −15°C. Ces cristaux de glace (primaires) se multiplient généralement sous l'influence des courants de convexion, soit par fragmentation, soit par collision, souvent suivie d'éclatement par choc thermique avec des gouttes d'eau surfondue. L'ensemble de ces mécanismes conduit à la formation de cristaux (secondaires) dont la concentration est très grande en comparaison avec celle des noyaux glaçogènes naturels.

Pour stimuler artificiellement une précipitation à partir de tels nuages, le procédé utilisé jusqu'à présent consistait à introduire dans la partie froide du nuage des noyaux glaçogènes artificiels, notamment des particules d'iodure d'argent pour augmenter dans une très large proportion le nombre de noyaux glaçogènes.

La grêle, qui peut se former dans les nuages dont le sommet est à température négative, est la conséquence d'une altération des processus de multiplication des cristaux de glace primaires, et le grêlon est le résultat de l'agrégation autour d'un noyau central soit de gouttes surfondues soit de fragments de glace. Les phénomènes entraînant sa formation sont encore relativement mal connus.

Certaines théories de la prévention de la grêle admettent que les gros grêlons ne peuvent croître que si les embryons de glace secondaires sont en nombre suffisamment faible pour ne pas souffrir de compétition mutuelle. Cette hypothèse est à la base de la majorité des techniques de prévention qui consistent à injecter dans le nuage des noyaux glaçogènes artificiels pour induire une compétition des embryons glaçogènes.

Ceux-ci sont généralement des particules solides d'iodure d'argent ou de plomb ou de certains composés organiques tels que le phloroglucinol et l'urée. Selon cette théorie, la compétition due à l'augmentation du nombre de noyaux glaçogènes aura pour effet une moindre croissance des grêlons.

Cependant, bien que cette méthode soit appliquée depuis une trentaine d'années, ses résultats sont toujours discutés. Il n'est pas certain que les résultats estimés positifs aient une valeur significative. Mais surtout, l'expérience a montré que cette technique pouvait dans certains cas conduire à une augmentation des chutes de grêle. Voir par exemple David Atlas «The Paradox of Hail Suppression», Science, 14 Janvier 1977, volume 195, numéro 4274, pages 139–145.

En outre, certaines considérations théoriques et certaines observations expérimentales conduisent à mettre en doute la possibilité de lutter contre la grêle par l'insémination de petites particules d'iodure d'argent, indépendamment des techniques d'ensemencement qui font elles aussi l'objet de controverses.

Il faut donc considérer que cette méthode de lutte ne peut, au mieux, donner des résultats favorables que dans certaines conditions particulières.

Toutefois ces incertitudes ou ces échecs n'ont pas conduit jusqu'à présent à l'élaboration de techniques plus efficaces et de nombreux auteurs continuent encore de préconiser l'utilisation des particules d'iodure d'argent.

Il n'en reste pas moins que tenter de prévenir la grêle par une compétition d'embryons glaçogènes, c'est en fin de compte créer une population supplémentaire de cristaux de glace qui peuvent eux-mêmes, dans certaines circonstances, devenir des grêlons. Finalement cette méthode n'apparaît pas la plus judicieuse.

Il a aussi été proposé d'utiliser l'effet de la dispersion de noyaux hygroscopiques, mais ceux-ci sont difficiles à disperser, et l'effet de dilution dû à la croissance des gouttes entraîne une diminution de la concentration en matériau hygroscopique qui ne permet pas d'éviter la congélation; on a également proposé l'effet combiné de la dispersion de noyaux hygroscopiques suivie de la dispersion de noyaux glaçogènes, mais cette voie d'approche est très discutable, notamment dans la mesure où elle n'évitera pas les critiques qui viennent d'être exprimées à propos des noyaux hygroscopiques et des noyaux glaçogènes.

Pour stimuler les précipitations dans les «nuages chauds», c'est-à-dire les nuages développés à température supérieure à 0°C, on a surtout préconisé la dispersion de gros noyaux de condensation artificiels sous forme de particules solides de produits hygroscopiques tels que le chlorure de sodium, le chlorure de calcium, etc., ou de certains matériaux hydrophiles capables d'absorber des quantités importantes de vapeur d'eau, tels des sels de l'acide alginique, notamment l'alginate de sodium.

Toutefois, ces méthodes présentent notamment les inconvénients liés au principe même de l'utilisation de particules solides, et qui sont notamment les suivants:

– Les particules solides sont plus difficiles à disperser que les particules liquides;

– Les surfaces solides sont plus sensibles aux effets des contaminations;

– L'énergie nécessaire pour adsorber la vapeur d'eau sur une surface solide est bien plus importante que sur une surface liquide.

Il est difficile d'obtenir, de stocker et de disperser des microparticules solides ayant des dimensions de quelques microns, et en pratique, les particules solides ont généralement des dimensions plus importantes, de sorte que, à nombre de noyaux de condensation égal, la masse à disperser est plus importante, dans le cas de particules solides, que dans le cas de liquides.

La présente invention a pour objet un procédé qui permet de stimuler artificiellement des précipitations, aussi bien dans les nuages ou brouillards à température positive que dans les nuages ou brouillards à température négative, et qui constitue en même temps une technique de prévention de la grêle non fondée sur l'hypothèse de la compétition d'embryons glaçogènes.

Ce procédé vise au contraire, dans le cas de la prévention de la grêle, d'une part à augmenter considérablement dans la zone ou les zones d'accumulation la population de gouttelettes de dimension moyenne (10 à 30 microns environ), et d'autre part à rendre ces gouttelettes stables, c'est-à-dire à minimiser la fraction d'entre elles qui serait susceptible de se congeler à des températures comprises entre 0 et −40 °C.

L'invention est fondée en outre sur le choix d'un ensemencement à l'aide de particules liquides.

Il est en effet apparu que l'utilisation d'une dispersion de particules solides n'est pas un choix heureux pour diverses raison d'ordre physique. C'est ainsi que la sensibilité bien connue des surfaces solides, notamment glaçogènes, à toutes sortes de contaminations, fait que, pour l'eau, la transition de la phase vapeur à la phase liquide, de même que la transition de la phase liquide surfondue à la phase solide, sur une petite particule solide, présente un certain caractère aléatoire. En outre, il est connu que les particules d'iodure d'argent sont rapidement désactivées par les radiations, notamment ultra-violettes.

Un intérêt majeur du présent procédé est justement de produire des hydrométéores à l'état liquide, et non solide.

La condensation d'une vapeur sur une surface liquide est infiniment moins sensible aux effets de contamination. Il s'agit là d'un fait connu sur le plan théorique et expérimental.

De plus, l'énergie à dépenser pour adsorber la vapeur d'eau sur une surface de liquides tels que ceux utilisés dans le présent procédé est quasiment nulle et en tout cas est infiniment plus faible que celle exigée pour créer une phase liquide, et à plus forte raison une phase solide (notamment par déposition) sur une particule solide.

Le document FR-A-2 164 785 décrit l'utilisation de certains polyalcools sous forme de compositions soit solides soit liquides pour réduire des formations nuageuses, et en particulier dissiper des brouillards, principalement ceux du type dit «brumes de chaleur».

Le document FR-A-2 148 669 décrit des compositions fluides comprenant au moins deux composés choisis parmi l'acétamide, l'urée et le nitrate d'ammonium, ces compositions étant destinées à dissiper des formations nuageuses et en particulier à disperser des brouillards chauds.

La présente invention repose sur la découverte de nouvelles compositions liquides qui sont caractérisées essentiellement par la présence de diméthylsulfoxyde comme ingrédient actif principal. On a effet observé, comme cela est exposé en détail ci-après que des micro-gouttelettes obtenues avec de telles compositions et exposées à une atmosphère d'humidité relative suffisante grossissent rapidement et donnent des gouttelettes stables même pour des taux de dilution très importantes. Cette stabilité des gouttelettes obtenue semble résulter d'une structure particulière de la solution diluée et ne peut pas s'expliquer en tout cas par le seul effet cryohydratique.

Le présent procédé consiste à disperser dans une atmosphère susceptible de donner lieu à des précipitations telles qu'un nuage ou qu'un brouillard, des micro-gouttelettes qui sont obtenues à partir d'une composition liquide et qui vont grossir très rapidement dès que l'humidité relative de l'air dépasse 40 à 50% pour atteindre, à la saturation, par rapport à la glace (au-dessous de 0 °C) et par rapport à l'eau (au-dessus de 0 °C), des dimensions pouvant aller jusqu'à 50 à 100 microns et même au delà, tout en restant à l'état liquide, et même surfondu à température négative, malgré l'effet de dilution. Ce procédé est essentiellement caractérisé par le fait que ladite composition contient du diméthylsulfoxyde comme ingrédient actif principal.

Le procédé de l'invention est mis en œuvre notamment en dispersant dans ladite atmosphère des micro-gouttelettes ayant de préférence des diamètres moyen pouvant varier de 1 à 10 microns, notamment de 1 à 6 microns, lesdites micro-gouttelettes étant obtenues à partir d'une composition liquide contenant du diméthylsulfoxyde (ou DMSO) comme constituant principal.

Le DMSO possède une aptitude à former des liaisons hydrogènes et donc à modifier la structure de l'eau liquide en la stabilisant.

Bien que le déposant ne s'estime pas limité par des considérations théoriques à un mécanisme d'action particulier, il est possible de penser que le DMSO, dans les nuages froids et dans les zones de formation de grêle, agira notamment par son aptitude à maintenir les gouttelettes à l'état surfondu même à des températures très basses.

Le DMSO et les propriétés qui le caractérisent, ont été décrits notamment par S. W. JACOB, E.E.

ROSENBAUM, et D.C. WOOD, Dimethylsulfoxide 1 (Basic concepts of DMSO), (1971) M. DEKKER.

Généralement, la composition utilisée dans le procédé de l'invention contient plus de 50% en poids, et de préférence au moins 80% en poids, de DMSO.

Le procédé de l'invention est de préférence mis en œuvre avec une composition qui contient en outre au moins un constituant supplémentaire, ledit constituant supplémentaire étant un matériau soluble dans le diméthylsulfoxyde et ayant une tension de vapeur inférieure à celle du diméthylsulfoxyde. Ce constituant supplémentaire présente l'avantage de stabiliser les micro-gouttelettes en évitant ou limitant leur évaporation. Pour cela, il est préférable que ledit matériau ait une tension de vapeur nettement inférieure à celle du DMSO, par exemple au plus égale à la moitié de celle du DMSO. Ledit matériau est généralement un solide. Il s'agit de préférence d'un matériau hygroscopique, dont la présence permet d'augmenter le pouvoir hydrophile du DMSO.

Ledit matériau est notamment un sel. Les sels sont choisis en particulier parmi les sels de lithium, de sodium, de potassium, d'ammonium, de magnésium et de calcium, et/ou parmi les chlorures, les iodures, les nitrates, les phosphates et les thiocyanates.

On peut citer en particulier les sels suivants:
– le chlorure de sodium, les chlorure et iodure de lithium, et le chlorure de calcium;
– l'iodure de sodium ou de potassium, le nitrate de lithium, sodium, de potassium, d'ammonium, de magnésium ou de calcium, le thiocyanate de potassium et le chlorure de magnésium;
– le chlorure ou l'iodure d'ammonium.

Le matériau ajouté au DMSO peut également être un produit organique hygroscopique, tel que l'urée.

Le DMSO est un bon solvant de pesticides et de fongicides. On peut donc associer un effet de stimulation de précipitations, ou de dispersion de brouillards, avec un effet curatif ou préventif utile en agriculture.

Pour mettre en œuvre le procédé de l'invention on utilise les appareils classiques permettant de pulvériser des liquides sous forme de micro-gouttelettes. Ces appareils sont notamment des conteneurs munis de moyens générateurs de micro-gouttelettes.

Lesdits moyens générateurs de micro-gouttelettes sont des appareils associant généralement deux fonctions, l'une consistant à éjecter, à l'aide d'un jet gazeux, le liquide à travers une tuyère de façon à le transformer en un aérosol de fines gouttelettes, et l'autre fonction consistant à propulser à une certaine distance (de quelques mètres à une dizaine de mètres) ledit aérosol. Le jet gazeux peut être obtenu soit à partir d'un compresseur à gaz, soit à partir de gaz comprimé, ou bien par des turbines qui assurent un débit gazeux très important. Parmi ce dernier type d'appareils, on peut citer l'appareil commercialisé par la Société VOLUMAIR (Ivry sur Seine, France).

Pour mettre en œuvre le procédé de l'invention, on peut effectuer la dispersion des micro-gouttelettes soit à partir du sol (cas des brouillards), soit à partir de moyens aériens tels que fusées, avions ou hélicoptères adaptés pour contenir l'appareillage de dispersion (cas de la stimulation de la pluie ou de la prévention de la grêle). La procédure d'ensemencement aérien est réalisée selon les techniques connues, soit dans les nuages ou à la base de ceux-ci, soit encore dans la zone frontale d'une cellule orageuse.

Pour prévenir la grêle, on disperse généralement la composition de l'invention dans le cœur d'un nuage grêligène, avant formation des premiers grêlons.

La présente invention a également pour objet les compositions telles que définies ci-dessus, utilisables comme agents de modification des précipitations atmosphériques.

L'invention s'étend auxdites compositions disposées dans un conteneur associé à un générateur de micro-gouttelettes.

Les compositions de la présente demande sont également des dispersions sous forme de micro-gouttelettes ayant les dimensions rappelées ci-dessus.

Les quantités de composition à utiliser dépendent de l'effet recherché.

Dans le cas de la dissipation des brouillards, la quantité à dissiper dépendra de l'opacité du brouillard, c'est-à-dire de la population de gouttelettes par $cm^3$ et de leur spectre dimensionnel, du volume de la zone à dissiper et de divers facteurs météorologiques dont la température et l'entraînement de la dispersion sous l'influence des turbulences. A titre indicatif, on peut disperser, à partir d'un ou plusieurs générateurs de micro-gouttelettes, de 2 à 50 kg de composition par $km^2$ à traiter. Dans le cas de la stimulation de la pluie, les quantités à disperser dépendront du type de nuage considéré, et des paramètres dynamiques et microphysiques qui permettent de le caractériser, tels que courants ascendants (convection, spectre granulométrique, etc...). A titre d'exemple, on peut disperser, à l'aide d'un ou plusieurs générateurs de micro-gouttelettes, de 50 à 200 kg de composition.

Pour la prévention de la grêle, on peut par exemple disperser la composition, transportée à l'aide d'une fusée, dans la ou les zones d'accumulation qui sont caractérisées par un fort écho radar. Les fusées, telles que celles du type Oblako, emportent par exemple 5 kg environ de composition à disperser. On procèdera à des tirs espacés dans le temps en fonction de l'évolution observée à l'aide des critères retenus, à partir des échos radar.

Dans un milieu nuageux où la teneur en vapeur est voisine de 100%, la croissance des micro-gouttelettes de la composition de l'invention en gouttes de 50 à 100 microns ou même au-delà est pratiquement spontanée. Pour des dispersions de particules solides de chlorure de sodium par exemple, la vitesse de croissance des gouttes formées est nettement plus faible. Encore faut-il tenir compte du temps de latence correspondant au temps nécessaire à la dissolution de la particule solide.

La vitesse de croissance des gouttelettes à partir d'un aérosol de la composition de l'invention (par exemple pour une composition LiCl + DMSO ou LiI + DMSO) est très rapide.

La remarquable stabilité des gouttelettes obtenues après croissance des micro-gouttelettes, même pour des taux de dilution de l'ordre de $^{1}/_{500}$ème ou du $^{1}/_{1000}$ème et même davantage, ne peut en aucun cas s'expliquer par un effet cryohydratique (abaissement du point de congélation des solutions), mais résulte assurément d'un changement de structure de cette solution très diluée.

Les exemples suivants illustrent l'invention sans toutefois la limiter. Sauf indications contraires, les pourcentages sont donnés en poids.

EXEMPLE 1:

On a réalisé des compositions constituées par des solutions de chlorure et d'iodure de lithium dans le diméthylsulfoxyde (DMSO).

A l'aide d'un générateur de micro-gouttelettes on a obtenu un aérosol stable de micro-gouttelettes ayant un diamètre moyen de 1 à 10 microns environ.

Alors qu'un aérosol comparable de DMSO n'est pas stable, car il s'évapore par suite de l'augmentation de la tension de vapeur liée à la diminution du diamètre des gouttes (loi de Kelvin), l'aérosol obtenu avec lesdites solutions de chlorure ou d'iodure de lithium dans le DMSO est stable.

Cet aérosol est capable de fournir un grand nombre de noyaux de condensation constitué par les micro-gouttelettes qui le constituent.

Par exemple, un aérosol homogène formé par des micro-gouttelettes de diamètre égales à 2 microns fournira environ $2{,}5 \cdot 10^{14}$ noyaux de condensation par litre.

Pour étudier le comportement des micro-gouttelettes en simulant les conditions naturelles, on a construit une «chambre de condensation», sphérique, d'un volume utile de 200 litres, en verre pyrex, dont le refroidissement est assuré par une circulation annulaire homogène périphérique de glycol. La température de cette enceinte est programmable entre + 20 °C et − 35 °C. La sursaturation en vapeur d'eau est assurée par détente adiabatique. Le comptage de l'aérosol de gouttelettes est effectué selon la méthode imaginée par J.S. Ryan et Al (J. Opt. Soc. Amer., Janvier 1979, N° 1, 60–67).

Il s'agit de la méthode appelée «Laser backscattering».

On a trouvé que lorsqu'elles sont placées dans une atmosphère à température comprise entre 0 et − 25 °C, et pour une humidité relative croissante depuis 40% environ, des micro-gouttelettes de solution à 5% de chlorure ou d'iodure de lithium dans le DMSO absorbent des quantités importantes de vapeur d'eau, et forment à la saturation par rapport à l'eau surfondue des gouttelettes dont la taille varie en fonction des conditions initiales, mais se situe généralement dans la gamme de 20 à 40 microns environ. De telles gouttelettes ne se congèlent pas même à − 35 °C, bien que le rapport de dilution en volume puisse atteindre des valeurs variant entre $^{1}/_{100}$ème et plus de $^{1}/_{1000}$ème.

La vitesse de croissance des gouttelettes est fonction de la vitesse de variation de l'humidité relative.

Les gouttelettes obtenues restent surfondues malgré les effets de la dilution. On a pu obtenir une multitude de gouttes de solution de «DMSO + LiCl + $H_2O$», ou de «DMSO + LiI + $H_2O$», de taille de l'ordre de 100 microns à des températures voisines ou inférieures à − 40 °C sans voir apparaître un seul cristal de glace. On a même atteint des surfusions de − 80 °C.

EXEMPLE 2

On a réalisé des compositions constituées par une solution de phosphate tripotassique dans le DMSO, contenant 5% en poids de chlorure de sodium.

En opérant de manière analogue à celle décrite dans l'exemple précédent, on a obtenu des résultats comparables.

EXEMPLE 3

On a réalisé des compositions constituées par des solutions d'urée dans le DMSO.

Les compositions contenaient soit 5% soit 10% en poids d'urée par rapport au poids total de la composition.

A l'aide d'un générateur de micro-gouttelettes on a obtenu un aérosol stable de micro-gouttelettes ayant un diamètre moyen de 1 à 10 microns environ.

Cet aérosol est stable.

EXEMPLE 4

Pour étudier le comportement des micro-gouttelettes en simulant les conditions naturelles, on utilise la chambre de condensation sphérique décrite à l'exemple 1.

Placés dans un milieu dont la teneur en vapeur d'eau croît depuis 40% (par rapport à la glace) des aérosols du mélange DMSO-urée à 5% d'urée se développent et conduisent à des gouttes de diamètre de 30 à 40 microns à la saturation par rapport à l'eau. Des résultats semblables ont été obtenus pour des concentrations d'urée de 10% et de 15%.

EXEMPLE 5

On a réalisé une composition constituée par une solution d'iodure d'ammonium dans le DMSO, contenant 5% en poids d'iodure d'ammonium.

Cette composition permet d'obtenir des résultats comparables à ceux obtenus avec les compositions contenant de l'urée.

EXEMPLE 6

Dispersion d'un brouillard.

Plusieurs essais ont été effectués dans la vallée du Grésivaudan, près d'un plan d'eau. Il s'agissait de brouillards à température voisine de 0 °C; mais positive. A l'aide d'un générateur de micro-gouttelettes on a dispersé environ 4 kg d'une solution à 5% de chlorure de sodium dans le DMSO, l'appareil étant dirigé dans le sens du vent qui avait une vitesse de l'ordre de 1 à 2 m par seconde. La nappe de brouillard, qui avait une hauteur de 50 à 60 mètres, a été dissipée sur une superficie de 40 ha environ. La visibilité, qui était de l'ordre d'une trentaine de mètres, a été portée à 500–600 mètres dans un délai de l'ordre de 15 à 20 minutes après la pulvérisation.

**Revendications**

1. Procédé de modification artificielle des précipitations atmosphériques, dans lequel on disperse, dans une atmosphère susceptible de donner lieu à des précipitations, telle qu'un nuage ou un brouillard, des micro-gouttelettes d'une composition liquide, caractérisé par le fait que ladite composition contient du diméthylsulfoxyde comme ingrédient actif principal.

2. Procédé selon la revendication 1, caractérisé par le fait que l'on disperse dans ladite atmosphère des micro-gouttelettes ayant des diamètres moyens pouvant varier de 1 à 10 microns.

3. Procédé selon la revendication 2, caractérisé par le fait que les diamètres moyens varient de 1 à 6 microns.

4. Procédé selon l'une quelconque des revendications 1 à 3, caractérisé par le fait que ladite composition contient plus de 50% en poids de diméthylsulfoxyde.

5. Procédé selon l'une quelconque des revendications 1 à 3, caractérisé par le fait que ladite composition contient au moins 80% en poids de diméthylsulfoxyde.

6. Procédé selon l'une quelconque des revendications précédentes, caractérisé par le fait que ladite composition contient en outre au moins un constituant supplémentaire, ledit constituant supplémentaire étant un matériau soluble dans le diméthylsulfoxyde et ayant une tension de vapeur inférieure à celle du diméthylsulfoxyde.

7. Procédé selon la revendication 6, caractérisé par le fait que ledit matériau a une tension de vapeur au plus égale à la moitié de celle du diméthylsulfoxyde.

8. Procédé selon la revendication 7, caractérisé par le fait que ledit matériau est un matériau solide.

9. Procédé selon la revendication 8, caractérisé par le fait que ledit matériau est un sel.

10. Procédé selon la revendication 9, caractérisé par le fait que ledit sel est choisi parmi les sels de lithium, sodium, de potassium, d'ammonium, de magnésium et de calcium.

11. Procédé selon l'une quelconque des revendications 9 et 10, caractérisé par le fait que ledit sel est choisi parmi les chlorures, les iodures, les nitrates, les phosphates et les thiocyanates.

12. Procédé selon l'une quelconque des revendications 6 à 11, caractérisé par le fait que ledit matériau est un matériau hygroscopique.

13. Procédé selon la revendication 12, caractérisé par le fait que ledit matériau est choisi dans le groupe constitué par le chlorure de sodium, les chlorure et iodure de lithium, et le chlorure de calcium.

14. Procédé selon l'une quelconque des revendications 9 à 12, caractérisé par le fait que ledit sel est choisi dans le groupe constitué par l'iodure de sodium, ou de potassium, le nitrate de lithium, sodium, de potassium, d'ammonium de magnésium ou de calcium, le thiocyanate de potassium et le chlorure de magnésium.

15. Procédé selon l'une quelconque des revendications 9 à 12, caractérisé par le fait que ledit sel est le chlorure ou l'iodure d'ammonium.

16. Procédé selon l'une quelconque des revendications 6 à 11, caractérisé par le fait que ledit matériau est un produit organique hygroscopique.

17. Procédé selon la revendication 16, caractérisé par le fait que ledit matériau est l'urée.

18. Procédé selon l'une quelconque des revendications 6 à 17, caractérisé par le fait que la teneur en ledit matériau varie de 0,1 à 15% en poids.

19. Procédé selon la revendication 18, caractérisé par le fait que ladite teneur varie de 1 à 10% en poids.

20. Procédé selon l'une quelconque des revendications précédentes, caractérisé par le fait que l'on disperse ladite composition à l'aide d'un appareil constitué par un conteneur muni de moyens générateurs de micro-gouttelettes.

21. Procédé selon l'une quelconque des revendications précédentes, caractérisé par le fait que l'on disperse ladite composition sous forme de micro-gouttelettes dans un nuage, à la base d'un nuage, dans une zone de brouillard, ou dans la zone frontale d'une cellule orageuse.

22. Procédé selon l'une quelconque des revendications précédentes, caractérisé par le fait que l'on disperse ladite composition dans le cœur d'un nuage grêligène, avant formation des grêlons.

23. Composition pour la modification des précipitations atmosphériques, se présentant sous la forme d'une composition liquide contenant du diméthylsulfoxyde comme ingrédient principal, caractérisée par le fait qu'elle est disposée dans un conteneur associé à un générateur de micro-gouttelettes.

24. Composition selon la revendication 23, caractérisée par le fait qu'elle présente les caractéristiques mentionnées dans l'une quelconque des revendications 4 à 19.

25. Utilisation du diméthylsulfoxyde comme ingrédient actif principal dans la préparation industrielle d'une composition liquide pour la modification des précipitations atmosphériques.

26. Utilisation selon la revendication 25, caractérisée par le fait que ladite composition présente les caractéristiques mentionnées dans l'une quelconque des revendications 4 à 19.

**Claims**

1. Process for artificial modification of atmospheric precipitation, in which microdroplets of a liquid composition are dispersed in an atmosphere liable to give rise to precipitation, such as a cloud or a fog, characterised in that the said composition contains dimethyl sulphoxide as principal active ingredient.

2. Process according to Claim 1, characterised in that microdroplets having mean diameters capable of varying from 1 to 10 microns are dispersed in the said atmosphere.

3. Process according to Claim 2, characterised in that the mean diameters vary from 1 to 6 microns.

4. Process according to any one of Claims 1 to 3, characterised in that the said composition contains more than 50% by weight of dimethyl sulphoxide.

5. Process according to any one of Claims 1 to 3, characterised in that the said composition contains at least 80% by weight of dimethyl sulphoxide.

6. Process according to any one of the preceding claims, characterised in that the said composition additionally contains at leat one additional component, the said additional component being a substance soluble in dimethyl sulphoxide and having a vapour pressure which is lower than that of dimethyl sulphoxide.

7. Process according to Claim 6, characterised in that the said substance has a vapour pressure which is at most equal to one half of that of dimethyl sulphoxide.

8. Process according to Claim 7, characterised in that the said substance is a solid substance.

9. Process according to Claim 8, characterised in that the said substance is a salt.

10. Process according to Claim 9, characterised in that the said salt is chosen from the salts of lithium, sodium, potassium, ammonium, magnesium and calcium.

11. Process according to either of Claims 9 and 11, characterised in that the said salt is chosen from chlorides, iodides, nitrates, phosphates and thiocyanates.

12. Process according to any one of Claims 6 to 11, characterised in that the said substance is a hygroscopic substance.

13. Process according to Claim 12, characterised in that the said substance is chosen from the group consisting of sodium chloride, lithium chloride and iodide, and calcium chloride.

14. Process according to any one of Claims 9 to 12, characterised in that the said salt is chosen from the group consisting of sodium or potassium iodide, lithium, sodium, potassium, ammonium, magnesium or calcium nitrate, potassium thiocyanate and magnesium chloride.

15. Process according to any one of Claims 9 to 12, characterised in that the said salt is ammonium chloride or iodide.

16. Process according to any one of Claims 6 to 11, characterised in that the said substance is a hygroscopic organic product.

17. Process according to Claim 16, characterised in that the said substance is urea.

18. Process according to any one of Claims 6 to 17, characterised in that the concentration of the said substance varies from 0.1 to 15% by weight.

19. Process according to Claim 18, characterised in that the said concentration varies from 1 to 10% by weight.

20. Process according to any one of the preceding claims, characterised in that the said composition is dispersed by means of an apparatus consisting of a container equipped with means which generate microdroplets.

21. Process according to any one of the preceding claims, characterised in that the said composition is dispersed in the form of microdroplets in a cloud, at the base of a cloud, in a fog zone, or in the frontal zone of a storm cell.

22. Process according to any one of the preceding claims, characterised in that the said composition is dispersed in the centre of a hail-forming cloud, before the formation of hailstones.

23. Composition for the modification of atmospheric precipitation, in the form of a liquid composition containing dimethyl sulphoxide as principal ingredient, characterised in that it is placed in a container associated with a microdroplet-generator.

24. Composition according to Claim 23, characterised in that it has the characteristics referred to in any one of Claims 4 to 19.

25. Use of dimethyl sulphoxide as principal active ingredient in the industrial preparation of a liquid composition for the modification of atmospheric precipitation.

26. Use according to Claim 25, characterised in that the said composition has the characteristics referred to in any one of Claims 4 to 19.

**Patentansprüche**

1. Verfahren zum künstlichen Verändern atmosphärischer Niederschläge, wobei man in einer Atmosphäre, die zu Niederschlägen führen könnte, beispielsweise einer Wolke oder einem Nebel, Mikrotröpfchen einer flüssigen Zusammensetzung verteilt, dadurch gekennzeichnet, dass die Zusammensetzung Dimethylsulfoxid als wirksamen Hauptbestandteil enthält.

2. Verfahren nach Anspruch 1, dadurch gekennzeichnet, dass man in der Atmosphäre Mikrotröpfchen verteilt, deren mittlerer Durchmesser zwischen 1 und 10 Mikron variieren kann.

3. Verfahren nach Anspruch 2, dadurch gekennzeichnet, dass der mittlere Durchmesser zwischen 1 und 6 Mikron variiert.

4. Verfahren nach einem der Ansprüche 1 bis 3, dadurch gekennzeichnet, dass die Zusammensetzung mehr als 50 Gew.-% Dimethylsulfoxid enthält.

5. Verfahren nach einem der Ansprüche 1 bis 3, dadurch gekennzeichnet, dass die Zusammensetzung mindestens 80 Gew.-% Dimethylsulfoxid enthält.

6. Verfahren nach einem der vorhergehenden Ansprüche, dadurch gekennzeichnet, dass die Zusammensetzung ausserdem mindestens einen weiteren Bestandteil enthält, wobei dieser weitere Bestandteil ein in Dimethylsulfoxid lösliches Material ist und einen Dampfdruck besitzt, der niedriger ist als der von Dimethylsulfoxid.

7. Verfahren nach Anspruch 6, dadurch gekennzeichnet, dass das Material einen Dampfdruck besitzt, der höchstens halb so hoch ist wie der Dampfdruck von Dimethylsulfoxid.

8. Verfahren nach Anspruch 7, dadurch gekennzeichnet, dass das Material ein Feststoff ist.

9. Verfahren nach Anspruch 8, dadurch gekennzeichnet, dass das Material ein Salz ist.

10. Verfahren nach Anspruch 9, dadurch gekennzeichnet, dass das Salz ausgewählt ist unter Lithium-, Natrium-, Kalium-, Ammonium-, Magnesium- und Calciumsalzen.

11. Verfahren nach einem der Ansprüche 9 und 10, dadurch gekennzeichnet, dass das Salz unter den Chloriden, Iodiden, Nitraten, Phosphaten und Thiocyanaten ausgewählt ist.

12. Verfahren nach einem der Ansprüche 6 bis 11, dadurch gekennzeichnet, dass das Material ein hygroskopisches Material ist.

13. Verfahren nach Anspruch 12, dadurch gekennzeichnet, dass das Material ausgewählt ist aus der Gruppe bestehend aus Natriumchlorid, Lithiumchlorid und -iodid und Calciumchlorid.

14. Verfahren nach einem der Ansprüche 9 bis 12, dadurch gekennzeichnet, dass das Salz ausgewählt ist aus der Gruppe bestehend aus Natrium- oder Kaliumiodid, Lithium-, Natrium-, Kalium-, Ammonium-, Magnesium- oder Calciumnitrat, Kaliumthiocyanat und Magnesiumchlorid.

15. Verfahren nach einem der Ansprüche 9 bis 12, dadurch gekennzeichnet, dass das Salz Ammoniumchlorid oder -iodid ist.

16. Verfahren nach einem der Ansprüche 6 bis 11, dadurch gekennzeichnet, dass das Material ein organisches hygroskopisches Produkt ist.

17. Verfahren nach Anspruch 16, dadurch gekennzeichnet, dass das Material Harnstoff ist.

18. Verfahren nach einem der Ansprüche 6 bis 17, dadurch gekennzeichnet, dass der Gehalt an dem Material zwischen 0,1 und 15 Gew.-% variiert.

19. Verfahren nach Anspruch 18, dadurch gekennzeichnet, dass der Gehalt zwischen 1 und 10 Gew.-% variiert.

20. Verfahren nach einem der vorhergehenden Ansprüche, dadurch gekennzeichnet, dass man die Zusammensetzung mit Hilfe einer Vorrichtung verteilt, welche aus einem Behälter besteht, der mit Mitteln zum Erzeugen von Mikrotröpfchen ausgestattet ist.

21. Verfahren nach einem der vorhergehenden Ansprüche, dadurch gekennzeichnet, dass man die Zusammensetzung in Form von Mikrotröpfchen in einer Wolke, an der Wolkenbasis, in einer Nebelzone oder in der Frontzone einer Gewitterwolke verteilt.

22. Verfahren nach einem der vorhergehenden Ansprüche, dadurch gekennzeichnet, dass man die Zusammensetzung im Kern einer zur Bildung von Hagelkörnern befähigten Wolke vor der Bildung von Hagelkörnern verteilt.

23. Zusammensetzung zum Verändern atmosphärischer Niederschläge, die in Form einer flüssigen, Dimethylsulfoxid als Hauptbestandteil aufweisenden Zusammensetzung vorliegt, dadurch gekennzeichnet, dass sie sich in einem Behälter befindet, der mit einer Vorrichtung zum Erzeugen von Mikrotröpfchen verbunden ist.

24. Zusammensetzung nach Anspruch 23, dadurch gekennzeichnet, dass sie die in einem der Ansprüche 4 bis 19 erwähnten Eigenschaften besitzt.

25. Verwendung von Dimethylsulfoxid als wirksamen Hauptbestandteil bei der industriellen Herstellung einer flüssigen Zusammensetzung zum Verändern atmosphärischer Niederschläge.

26. Verwendung nach Anspruch 25, dadurch gekennzeichnet, dass die Zusammensetzung die in einem der Ansprüche 4 bis 19 erwähnten Eigenschaften besitzt.